# EUROPEAN PATENT APPLICATION

(11) **EP 2 532 983 A2**
(43) Date of publication of application: **12.12.2012**
(21) Application number: 12169590.2
(22) Date of filing: 25.05.2012
(51) Int. Cl.: F24H 4/04, F25B 30/02, F25B 47/02, F24D 19/00

(54) **Heat pump boiler and control method for the same**

(30) Priority: 10.06.2011 KR 20110056083
(71) Applicant: Samsung Electronics Co., Ltd., Suwon-si, Gyeonggi-do, 443-742 (KR)
(72) Inventor: Jeong, Dong Woon, Gyeonggi-do (KR); Cho, Sung Oug, Seoul (KR); Song, Kil Hong, Seoul (KR); Kim, Rock Hee, Gyeonggi-do (KR); Kim, Sung Goo, Gyeonggi-do (KR)
(74) Representative: Walaski, Jan Filip

(57) **Abstract**

Disclosed are a heat pump boiler and a control method for the same. The heat pump boiler includes an outdoor unit having an outdoor-unit heat-exchanger, a water pipe including a water-feed pipe and a water-return pipe connected to the outdoor unit to feed water to the outdoor unit or to return low-temperature or medium-temperature water produced in the outdoor unit to an external location, heat exchangers connected to the water pipe to produce medium-temperature or high-temperature water, a variable-capacity compressor connected to the heat exchangers, a buffer tank connected to the water pipe, and an externally-wound heat exchanger to collect waste heat radiated from the compressor. A temperature of water stored in the buffer tank is raised using the collected waste heat, and, during a defrosting operation, the water stored in the buffer tank is fed to the outdoor-unit heat-exchanger to defrost an evaporator of the outdoor unit.

## Description

The present invention relates to a heat pump boiler and a control method for the heat pump boiler.

Recently, boiler products using a high-efficiency electric heat pump that exhibits superior energy efficiency than conventional combustion boilers have been actively studied and developed.

Single-stage cycle types using a single refrigerant employ R410A or R407C refrigerant, and are respectively used within a maximum temperature of water of 55°C or 65°C in terms of properties of refrigerant and cycle components.

A house having high thermal-insulation efficiency may be sufficiently heated even at the maximum temperature of water acquired by the aforementioned single-stage cycle type. However, existing houses exhibit insufficient heating effects under a low temperature of water because of low thermal-insulation efficiency thereof and provision of a low-efficiency radiator (or fan coil unit).

Products using two-stage cascade cycles have been released to obtain high-temperature water having a maximum temperature of about 80°C.

In the case of the two-stage cascade cycles, a cycle for a low-temperature part uses R410A refrigerant, and a cycle for a high-temperature part uses R134a refrigerant.

The reason for using the two-stage cycles is that when a compressor compresses a single refrigerant from a low evaporator pressure, which corresponds to a low temperature of outside air, to a high condenser pressure which corresponds to a high water temperature, an excessive compression ratio occurs. Thus causes a significant deterioration in the reliability and volumetric efficiency of the compressor, which may make it difficult to construct a high-efficiency system.

However, the two-stage cycles are very unfavourable for energy efficiency because it may be necessary for the refrigerant to pass through both the two-stage cycles even when preparing water of a medium-, or low- temperature other than water of a high temperature.

In consideration of energy efficiency, three plate-shaped heat exchangers have been used. In this case, however, since all of the three plate-shaped heat exchangers are mounted to a high-temperature water preparation unit and the high-temperature water preparation unit is in turn connected to an outdoor unit via a refrigerant pipe, installation of a heat pump boiler may require refrigeration and electrical engineers, which increases installation cost and time.

A heat pump boiler is mainly a product for heating, and therefore frosting of an outdoor-unit heat-exchanger may be inevitable when the heat exchanger is continuously exposed to outside humidity under low-temperature conditions of outside air.

Most heat pumps perform a defrosting operation by switching a refrigerant cycle for a moment from the outdoor-unit heat-exchanger to a condenser before heating performance thereof is considerably deteriorated due to frost excessively formed on a surface of the heat exchanger.

The defrosting operation is basically a cooling operation, in which thermal energy absorbed from indoor air or water is transmitted to the outdoor-unit heat-exchanger. During implementation of the defrosting operation, the heat pump boiler uses heating water inside pipes of a house in order to absorb thermal energy to be transmitted to the outdoor-unit heat-exchanger.

Thus, the temperature of heating water is lowered during the defrosting operation, and an additional heating operation may be inefficiently performed after completion of the defrosting operation to repeatedly raise the temperature of water.

Therefore, it is an aspect of the present disclosure to provide a heat pump boiler in which an outdoor-unit heat-exchanger for heat exchange between refrigerant and water is installed within an outdoor unit, allowing the outdoor unit to be directly connected to a high-temperature water preparation unit via a water pipe, and a control method for the heat pump boiler.

It is another aspect of the present disclosure to provide a heat pump boiler in which all temperature ranges of water including low-, medium-, and high-temperature water is producible at high energy efficiency owing to a cycle configuration of a high-temperature water preparation unit, and a control method for the heat pump boiler.

It is a further aspect of the present disclosure to provide a heat pump boiler in which heating operation thermal energy is accumulated in a buffer tank using waste heat radiated from a compressor within a high-temperature water preparation unit and is used for defrosting, preventing a discharge of cold water from the high-temperature water preparation unit, and a control method for the heat pump boiler.

Additional aspects will be set forth in part in the description which follows and, in part, will be obvious from the description, or may be learned by practice of the invention.

In accordance with one aspect, a heat pump boiler includes an outdoor unit, to which an outdoor-unit heat-exchanger for heat exchange between refrigerant and water is installed, a water pipe including a water feed pipe and a water return pipe, wherein the wafer feed pipe is connected to the outdoor unit to feed water to the outdoor unit, and the water return pipe is connected to the outdoor unit to return low-temperature or medium-temperature hot water and cold water produced in the outdoor unit to an external location, a plurality of heat exchangers connected to the water pipe, in which refrigerant and water undergo heat exchange to produce medium-temperature or high-temperature hot water, a compressor connected to the plurality of heat exchangers, wherein a capacity of the compressor is variable based on a set temperature of hot water, a buffer tank connected to the water pipe and configured to store water therein, and an externally-wound heat exchanger installed to the exterior of the variable-capacity compressor and serving to collect waste heat radiated outward from the compressor, wherein a temperature of water stored in the buffer tank is raised using waste heat collected by the externally-wound heat exchanger, and wherein, during a defrosting operation, the water stored in the buffer tank is fed to the outdoor-unit heat-exchanger of the outdoor unit while maintaining the raised temperature, to defrost an evaporator within the outdoor unit.

The outdoor-unit heat-exchanger installed to the outdoor unit may include a plate-shaped heat exchanger, and refrigerant to undergo heat exchange with water in the outdoor-unit heat-exchanger may be R410A refrigerant.

The outdoor-unit heat-exchanger may be installed to the outdoor unit such that the outdoor unit is directly connected to the water pipe, and low-temperature or medium-temperature hot water and cold water may be directly produced via sole operation of the outdoor unit.

The plurality of heat exchangers may include plate-shaped heat exchangers using R134a as a refrigerant to undergo heat exchange with water in the plurality of heat-exchangers.

The plurality of heat exchangers may include a first heat exchanger serving as an evaporator during a heating operation, and a second heat exchanger serving as a condenser.

A plurality of 3-way valves may be installed to the water pipe to selectively switch a circulating direction of water.

The water feed pipe of the water pipe may be provided with two 3-way valves, and the water return pipe of the water pipe may be provided with three 3-way valves.

The two 3-way valves installed to the water feed pipe may include a first 3-way valve located adjacent to the outdoor unit to allow water to be directly fed from the external location to the outdoor unit, or to allow water to be fed from the buffer tank to the outdoor unit, and a second 3-way valve located at an opposite side of the first 3-way valve to allow water to be directly fed from the external location to the outdoor unit, or to allow water to be fed from the external location to the second heat exchanger.

The three 3-way valves installed to the water return pipe may include a third 3-way valve located adjacent to the outdoor unit to allow water to be directly returned from the outdoor unit to the external location, or to allow water to be fed from the outdoor unit to the first heat exchanger, a fourth 3-way valve located at an opposite side of the third 3-way valve to allow water to be directly returned from the outdoor unit to the external location, or to allow water to be returned from the second heat exchanger to the external location. A fifth 3-way valve located at an opposite side of the third 3-way valve to allow water to be directly returned from the outdoor unit to the external location, or to allow water having passed through the second heat exchanger to be used for heating or water supply.

The heat pump boiler may further include a low-temperature pump to circulate water such that water is fed from the external location to the outdoor unit, or is returned from the outdoor unit to the external location.

The low-temperature pump may circulate water such that the low-temperature or medium-temperature water produced in the outdoor unit is again circulated to the outdoor unit by way of the first heat exchanger and the buffer tank.

The heat pump boiler may further include a high-temperature pump to circulate water such that water fed from the external location is returned to the external location by way of the second heat exchanger.

The heat pump boiler may further include an expansion tank to prevent increase in interior pressure due to change in the temperature of water.

The heat pump boiler may further include a low-temperature flow switch to sense the flow of water when water fed to the outdoor unit is returned to the external location, and to stop operation of the compressor installed to the outdoor unit if the flow of water stops, so as to prevent freezing and bursting or overheating of the outdoor-unit heat-exchanger due to abnormal operation of the outdoor unit.

The heat pump boiler may further include a high-temperature flow switch to sense the flow of water circulated by the high-temperature pump, and to stop the entire system if the flow of water stops.

The heat pump boiler may further include a defrosting pump to circulate water between the externally-wound heat exchanger and the buffer tank.

The heat pump boiler may further include a solenoid valve to selectively intercept water circulated by the defrosting pump.

In accordance with another aspect, a control method for a heat pump boiler to acquire low-temperature or medium-temperature hot water, includes feeding water from an external location into the heat pump boiler through a water feed pipe via operation of a low-temperature pump, switching a first 3-way valve and a second 3-way valve, installed to the water feed pipe, to an outdoor unit such that the water fed into the heat pump boiler is directly fed to the outdoor unit through the water feed pipe, producing low-temperature or medium-temperature hot water via heat exchange between the water fed to the outdoor unit and refrigerant by an outdoor-unit heat-exchanger installed to the outdoor unit, and switching a third 3-way valve, fourth 3-way valve and fifth 3-way valve, installed to a water return pipe, to the external location to allow the low-temperature or medium-temperature hot water produced in the outdoor unit to be directly returned to the external location by the low-temperature pump, so as to return the low-temperature or medium-temperature hot water to the external location through the water return pipe.

The low-temperature or medium-temperature hot water, returned from the outdoor unit to the external location through the water return pipe by the low-temperature pump, may be used as hot water for heating or water supply according to switching of the fifth 3-way valve.

The flow of water may be sensed when water fed to the outdoor unit is returned to the external location, and a low-temperature flow switch is operated to stop operation of a compressor installed to the outdoor unit if the flow of water stops, so as to prevent freezing and bursting or overheating of the outdoor-unit heat-exchanger due to abnormal operation of the outdoor unit.

In accordance with another aspect, a control method for a heat pump boiler to acquire medium-temperature or high-temperature hot water, includes discharging low-temperature or medium-temperature hot water, which is produced as water is fed to an outdoor unit via operation of a low-temperature pump, from the outdoor unit by the low-temperature pump, switching a third 3-way valve, installed to a water return pipe, to a first heat exchanger to allow the low-temperature or medium-temperature hot water discharged from the outdoor unit to be moved to the first heat exchanger through the water return pipe, and performing heat exchange between the low-temperature or medium-temperature hot water moved to the first heat exchanger and refrigerant in the first heat exchanger, changing the refrigerant, which absorbs thermal energy from the low-temperature or medium-temperature hot water via heat exchange in the first heat exchanger, into high-temperature refrigerant via a compressor, and transmitting the high-temperature refrigerant to a second heat exchanger, switching a second 3-way valve installed to a water feed pipe to feed water from an external location to the second heat exchanger, so as to enable heat exchange between the refrigerant transmitted to the second heat exchanger and the water in the second heat exchanger, and producing medium-temperature or high-temperature hot water as the water fed to the second heat exchanger is raised in temperature via heat exchange with the refrigerant in the second heat exchanger, and returning the medium-temperature or high-temperature hot water to the external location.

A first 3-way valve installed to the water feed pipe may be switched to the outdoor unit such that the low-temperature or medium-temperature hot water having passed through the first heat exchanger is returned to the outdoor unit by way of a buffer tank.

A capacity of the compressor installed between the first heat exchanger and the second heat exchanger may be variable based on a set temperature of hot water, to improve heating efficiency.

Waste heat radiated from the compressor may be collected by an externally-wound heat exchanger installed to the exterior of the compressor, and a temperature of water stored in the buffer tank may be raised using the waste heat collected by the externally-wound heat exchanger.

A defrosting pump may be operated to circulate the water, the temperature of which has been raised using the waste heat collected by the externally-wound heat exchanger, through the buffer tank, and a solenoid valve may be provided to selectively intercept the water circulated by the defrosting pump.

A high-temperature pump may be operated to feed water to the second heat exchanger, or to return water having passed through the second heat exchanger to the external location.

A fifth 3-way valve, installed to the water return pipe, may be switched such that the medium-temperature or high-temperature hot water, which is returned from the second heat exchanger to the external location through the water return pipe by the high-temperature pump, is used as hot water for heating or water supply.

The flow of water circulated by the high-temperature pump may be sensed, and a high-temperature flow switch may be operated to stop the entire system if the flow of water stops.

In accordance with another aspect, a control method for a heat pump boiler to feed high-temperature hot water to an outdoor-unit heat-exchanger installed to an outdoor unit and defrost an evaporator installed to the outdoor unit, includes controlling a plurality of 3-way valves installed to a water feed pipe and a water return pipe and a high-temperature pump, to prevent circulation of water to an external location, stopping operation of a defrosting pump and closing a solenoid valve, to prevent high-temperature hot water stored in a buffer tank from being discharged from the buffer tank, and operating a low-temperature pump and controlling a first 3-way valve installed to the water feed pipe, to allow the high-temperature hot water stored in the buffer tank to be moved to the outdoor-unit heat-exchanger and used to defrost the evaporator installed to the outdoor unit.

A temperature of the hot water stored in the buffer tank may be sensed using a temperature sensor installed to the outdoor unit, and if the temperature of the hot water stored in the buffer tank is excessively lowered, the water having the lowered temperature may be discharged from the buffer tank.

These and/or other aspects of the invention will become apparent and more readily appreciated from the following description of the embodiments, taken in conjunction with the accompanying drawings in which:
FIG. 1 is a schematic diagram illustrating an outdoor unit according to an embodiment of the present invention;
FIG. 2 is a schematic diagram illustrating a high-temperature water preparation unit according to an embodiment of the present invention;
FIG. 3 is a schematic diagram illustrating a heat pump boiler in which an outdoor unit and a high-temperature water preparation unit are connected to each other according to an embodiment of the present invention;
FIG. 4 is a schematic diagram illustrating a control method for a heat pump boiler to prepare low- or medium-temperature water according to an embodiment of the present invention;
FIG. 5 is a schematic diagram illustrating a control method for a heat pump boiler to prepare medium- or high-temperature water according to an embodiment of the present invention; and
FIG. 6 is a schematic diagram illustrating a control method for a heat pump boiler during a defrosting operation according to an embodiment of the present invention.

Reference will now be made in detail to the embodiments of the present invention, examples of which are illustrated in the accompanying drawings, wherein like reference numerals refer to like elements throughout.

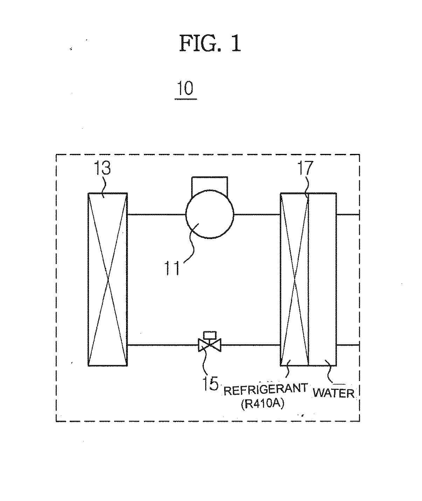

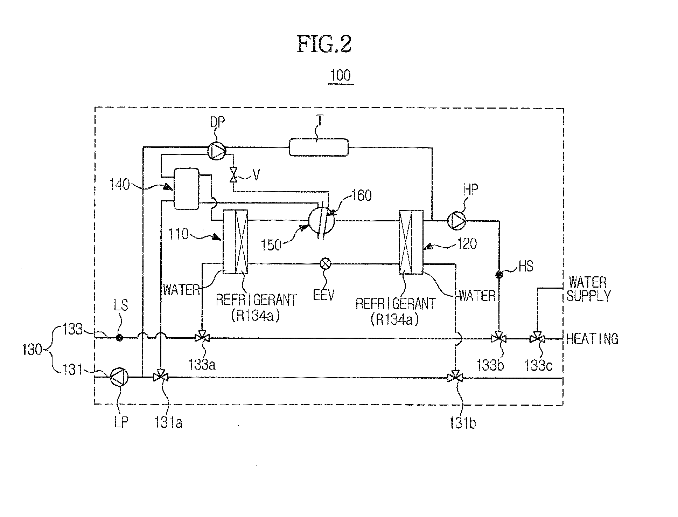

As shown in FIGS. 1 to 3, a heat pump boiler 1 includes an outdoor unit 10 and a high-temperature water preparation unit 100.

The outdoor unit 10 includes a compressor 11, evaporator 13, expansion valve 15, and an outdoor-unit heat-exchanger 17 which also serves as a condenser.

The outdoor-unit heat-exchanger 17 may be a plate-shaped heat exchanger for heat exchange between refrigerant and water. R410A refrigerant may be used in the outdoor-unit heat-exchanger 17.

The outdoor-unit heat-exchanger 17 for heat exchange between water and refrigerant is directly mounted to the outdoor unit 10, and thus the outdoor unit 10 is directly connectable to the high-temperature water preparation unit 100 via a water pipe 130.

In the outdoor unit 10, the outdoor-unit heat-exchanger 17 performs heat exchange between the aforementioned refrigerant and water fed to the outdoor unit 10. Thus, the outdoor unit 10 may produce low- or medium-temperature water via sole operation thereof.

The high-temperature water preparation unit 100 includes the water pipe 130 to feed or return water to the outdoor unit 10, a plurality of heat exchangers 110 and 120 for heat exchange between refrigerant and water, which are connected to the water pipe 130, a compressor 150 connected to the plurality of heat exchangers 110 and 120, the capacity of which is variable based on a set temperature of hot water, a buffer tank 140 connected to the water pipe 130 for storage of water, and an externally-wound heat exchanger 160 attached to the exterior of the compressor 150.

The water pipe 130 is directly connected to the outdoor unit 10, and includes a water feed pipe 131 to feed water to the outdoor-unit heat-exchanger 17, and a water return pipe 133 to return low- or medium-temperature water, generated by heat exchange with the refrigerant in the outdoor-unit heat-exchanger 17, to an external location.

The water pipe 130 may be provided with a plurality of 3-way valves 131a, 131b, 133a, 133b, and 133c, which may selectively switch the circulating direction of water.

Although the two 3-way valves 131a and 131b are illustrated as being installed on the water feed pipe 131 and the three 3-way valves 133a, 133b, and 133c are illustrated as being installed on the water return pipe 133, the number of the 3-way valves installed on the water pipe 130 may be adjusted as necessary.

Two 3-way valves 131a and 131b are installed on the water feed pipe 131. The first 3-way valve 131a is located adjacent to the outdoor unit 10, and serves to switch the circulating direction of water such that water is directly fed from the external location to the outdoor unit 10, or is fed from the buffer tank 140 to the outdoor unit 10. The second 3-way valve 131b is located at an opposite side of the first 3-way valve 131a, and serves to switch the circulating direction of water such that water is directly fed from the external location to the outdoor unit 10, or is fed from the external location to the second heat exchanger 120 that will be described hereinafter.

Three 3-way valves 133a, 133b and 133c are installed on the water return pipe 133. The third 3-way valve 133a is located adjacent to the outdoor unit 10, and serves to switch the circulating direction of water such that water is directly returned from the outdoor unit 10 to the external location, or is fed from the outdoor unit 10 to the first heat exchanger 110 that will be described hereinafter. The fourth 3-way valve 133b is located at an opposite side of the third 3-way valve 133a, and serves to switch the circulating direction of water such that water is directly returned from the outdoor unit 10 to the external location, or is returned from the second heat exchanger 120 that will be described hereinafter to the external location. The fifth 3-way valve 133c is located near the fourth 3-way valve 133b with the fourth 3-way valve 133b interposed between the third 3-way valve 133b and the fifth 3-way valve 133c, and serves to switch the circulating direction of water such that water is directly returned from the outdoor unit 10 to the external location, or water having passed through the second heat exchanger 120 that will be described hereinafter may be used for heating or water supply.

The plurality of heat exchangers 110 and 120 which conduct a heat exchange operation between refrigerant and water may be plate-shaped heat exchangers. The refrigerant for heat exchange with water in the plurality of heat exchangers 110 and 120 may be R134a refrigerant.

The plurality of heat exchangers 110 and 120 includes the first heat exchanger 110, which performs heat exchange between water and refrigerant during a heating operation and serves as an evaporator and the second heat exchanger 120 which performs heat exchange between water and refrigerant and serves as a condenser.

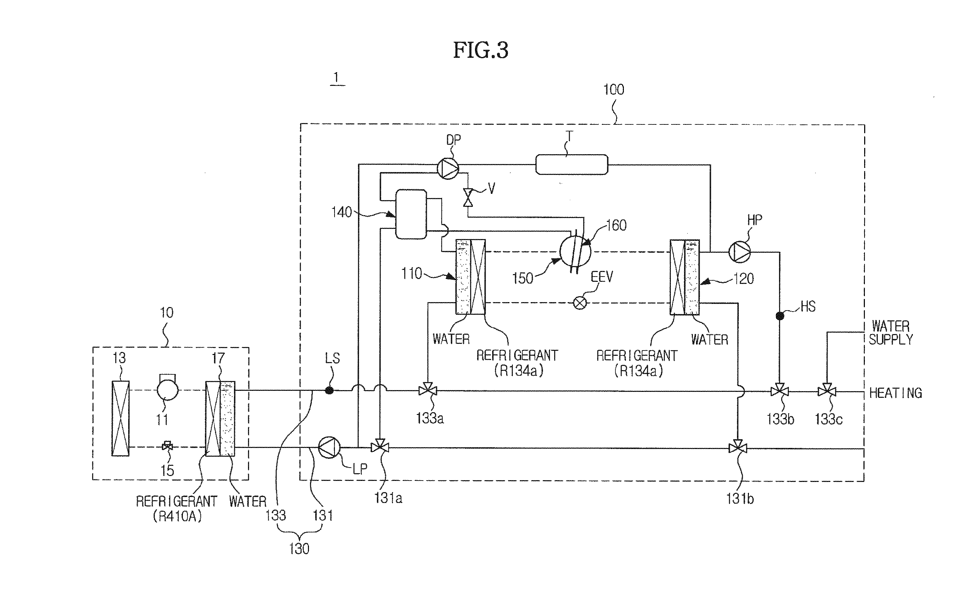

As represented by a dotted line in FIG. 3, the compressor 150 and an electronic expansion valve (EEV) are installed between the first heat exchanger 110 and the second heat exchanger 120 to constitute a single refrigerant circulating cycle. The first heat exchanger 110 and the second heat exchanger 120 independently perform heat exchange between refrigerant and water.

The compressor 150 is installed between the first heat exchanger 110 and the second heat exchanger 120, and may be an inverter compressor, the capacity of which is variable based on a set temperature of hot water.

Varying the capacity of the compressor 150 based on a set temperature of hot water may enhance efficiency of the heat pump boiler 1.

The buffer tank 140 is connected to the first heat exchanger 110 that is connected to the water pipe 130, and is configured to store water circulating through the high-temperature water preparation unit 100.

The buffer tank 140 functions to maintain a high temperature of water stored therein as water, the temperature of which is raised by the externally-wound heat exchanger 160 that will be described hereinafter, is fed to the buffer tank 140. The high-temperature water is used to defrost an evaporator 13 installed to the outdoor unit 10 during a defrosting operation of the heat pump boiler 1 that will be described hereinafter.

The externally-wound heat exchanger 160 is wound about the exterior of the compressor 150, and serves to collect waste water radiated outward from the compressor 150.

If the compressor 150 is operated, a case of the compressor 150 has a considerably high exterior temperature, which causes radiation of thermal energy via heat transfer with surrounding air.

The thermal energy radiated from the compressor 150 is collected by the externally-wound heat exchanger 160. The externally-wound heat exchanger 160 raises the temperature of water using the collected waste heat. Water is circulated between the buffer tank 140 and the externally-wound heat exchanger 160 by a defrosting pump DP that will be described hereinafter, high-temperature water is stored in the buffer tank 140.

This circulation of water within the high-temperature water preparation unit 100 is achieved by a low-temperature pump LP, a high-temperature pump HP as well as the defrosting pump DP.

The low-temperature pump LP serves to circulate water such that water is fed from the external location to the outdoor unit 10, or is returned from the outdoor unit 10 to the external location.

Moreover, the low-temperature pump LP circulates water such that low- or medium-temperature water produced in the outdoor unit 10 is discharged from the outdoor unit 10 and then returned to the outdoor unit 10 by way of the first heat exchanger 110 and the buffer tank 140 via switching of the first 3-way valve 131a and the third 3-way valve 133a.

The high-temperature pump HP serves to circulate water such that water fed from the external location is returned to the external source by way of the second heat exchanger 120.

The defrosting pump DP serves to circulate water, the temperature of water has been raised by the outwardly-shaped heat exchanger 160 using heat radiated from the compressor 150, between the outwardly-shaped heat exchanger 160 and the buffer tank 140.

The high-temperature water preparation unit 100 may be provided with a solenoid valve V to selectively intercept water that is circulated between the externally-wound heat exchanger 160 and the buffer tank 140 by the defrosting pump DP.

The high-temperature water preparation unit 100 may further include an expansion tank T configured to store a part of water circulating within the high-temperature water preparation unit 100 in order to prevent pressure increase due to change in the temperature of the water circulating within the high-temperature water preparation unit 100.

Additionally, the high-temperature water preparation unit 100 is provided with a low-temperature flow switch LS and a high-temperature flow switch HS which sense the flow of water.

The low-temperature flow switch LS is located adjacent to the outdoor unit 10, and serves to sense the flow of water when the water fed to the outdoor unit 10 is returned to the external location. If the flow of water stops, the low-temperature flow switch LS stops operation of the compressor 11 installed to the outdoor unit 10, which prevents freezing and bursting or overheating of the outdoor-unit heat-exchanger 17 due to abnormal operation of the outdoor unit 10.

The high-temperature flow switch HS is located at an opposite side of the outdoor unit 10, and serves to sense the flow of water that is circulated by the high-temperature pump HP. The high-temperature flow switch HS stops operation of the entire heat pump boiler 1 if the flow of water stops.

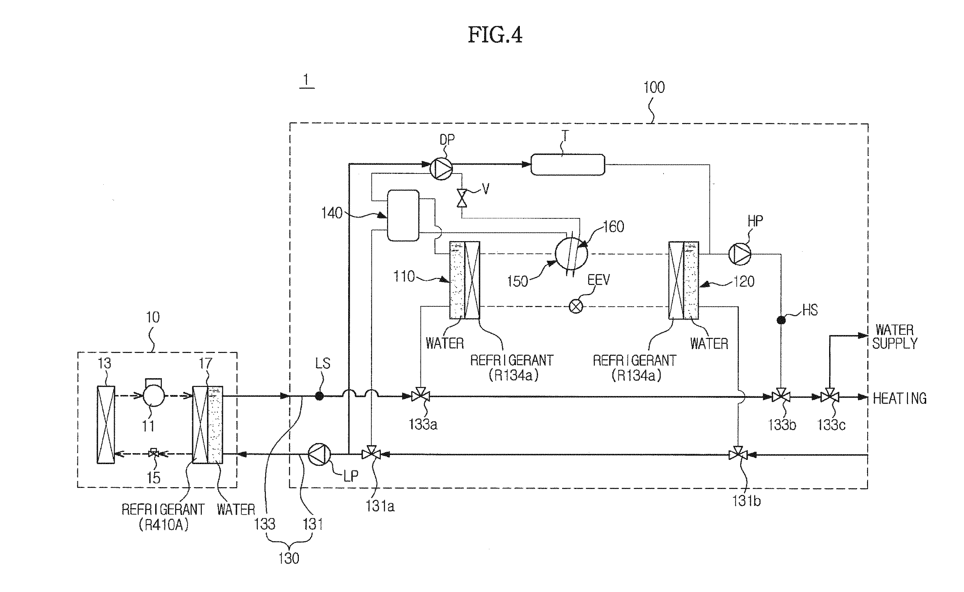

Hereinafter, a control method for the heat pump boiler will be described with reference to FIGS. 4 to 6.

FIG. 4 is a schematic diagram illustrating a control method for the heat pump boiler to prepare low- or medium-temperature water according to an embodiment of the present invention;

As shown in FIG. 4, first, the low-temperature pump LP is operated, causing water to be fed from the external location into the heat pump boiler 1.

When water is fed into the heat pump boiler 1 through the water feed pipe 131, the first 3-way valve 131a and the second 3-way valve 131b installed to the water feed pipe 131 are switched to the outdoor unit 10 such that the water is directly fed from the external location into the outdoor unit 10.

The water fed to the outdoor unit 10 undergoes heat exchange with refrigerant by the outdoor-unit heat-exchanger 17 that is installed to the outdoor unit 10. Through this heat exchange, the water fed to the outdoor unit 10 is changed to low- or medium-temperature hot water.

The low- or medium-temperature hot water, produced in the outdoor unit 10, is discharged from the outdoor unit 10 by the low-temperature pump LP. To allow the low- or medium-temperature hot water discharged from the outdoor unit 10 to be directly returned to the external location, the third 3-way valve 133a, the fourth 3-way valve 133b, and the fifth 3-way valve 133c installed to the water return pipe 133 are switched to the external location. In this way, the low- or medium-temperature hot water is returned to the external location.

In this case, the low- or medium-temperature hot water returned to the external location may be used as hot water for heating or water supply.

The low-temperature flow switch LS senses the flow of water when water fed to the outdoor unit 10 is returned the external location. If the flow of water stops, the low-temperature flow switch LS stops operation of the compressor 11 installed to the outdoor unit 10, which prevents freezing and bursting or overheating of the outdoor-unit heat-exchanger 17 due to abnormal operation of the outdoor unit 10.

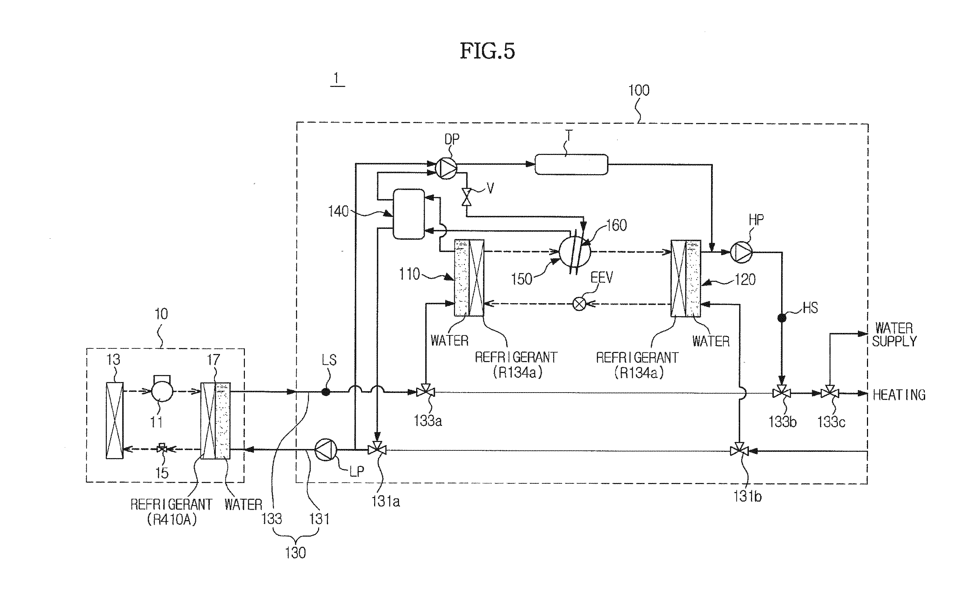

FIG. 5 is a schematic diagram illustrating a control method for the heat pump boiler to prepare medium- or high-temperature water according to an embodiment of the present invention.

As shown in FIGS. 4 and 5, once low- or medium-temperature hot water has been produced in the outdoor unit 10, the low- or medium-temperature hot water is directly returned to the external location, or is used to produce medium- or high-temperature hot water.

In the case in which the low- or medium-temperature hot water produced in the outdoor unit 10 is used to produce medium- or high-temperature hot water, as shown in FIG. 5, the low- or medium-temperature hot water discharged from the outdoor unit 10 is moved through the water return pipe 133.

To allow the low- or medium-temperature hot water to be fed to the first heat exchanger 110 through the water return pipe 133, the third 3-way valve 133a installed to the water return pipe 133 is switched to the first heat exchanger 110. In this way, the low- or medium-temperature hot water is fed to the first heat exchanger 110.

The low- or medium-temperature hot water, fed to the first heat exchanger 110, undergoes heat exchange with refrigerant in the first heat exchanger 110. The refrigerant, which absorbs thermal energy from the low- or medium-temperature hot water via heat exchange, is changed to high-temperature refrigerant via the compressor 150 as represented by a dotted line in the drawing, and then is transmitted to the second heat exchanger 120.

In this case, when the refrigerant is transmitted from the first heat exchanger 110 to the second heat exchanger 120 by way of the compressor 150, waste heat radiated outward from the compressor 150 is collected by the externally-wound heat exchanger 160 that is attached to the exterior of the compressor 150. The heat collected by the externally-wound heat exchanger 160 is used to raise the temperature of water passing through the externally-wound heat exchanger 160.

The water, the temperature of which has been raised when passing through the externally-wound heat exchanger 160, is circulated between the externally-wound heat exchanger 160 and the buffer tank 140, thereby serving to raise the temperature of water stored in the buffer tank 140.

The water circulated by the defrosting pump DP may be selectively intercepted by the solenoid valve V.

The high-temperature pump HP is operated to feed water into the high-temperature water preparation unit 100 such that the refrigerant transmitted to the second heat exchanger 120 undergoes heat exchange with the water. The second 3-way valve 131b installed to the water feed pipe 131 is switched to the second heat exchanger 120 such that the water fed to the high-temperature water preparation unit 100 is fed to the second heat exchanger 120.

The water fed to the second heat exchanger 120 is raised in temperature via heat exchange with the refrigerant in the second heat exchanger 120. In this way, the water having passed through the second heat exchanger 120 is changed to medium- or high-temperature hot water.

The medium- or high-temperature hot water, produced as described above, is returned to the external location by the high-temperature pump HP, and is used for heating or water supply based on the switching direction of the fifth 3-way valve 133c installed to the water return pipe 133.

The high-temperature flow switch HS senses the flow of water circulated by the high-temperature pump HP. The high-temperature flow switch HS stops operation of the entire heat pump boiler 1 if the flow of water stops.

In this case, the first 3-way valve 131a installed to the water feed pipe 131 is switched to the outdoor unit 10, such that the low- or medium-temperature hot water having passed through the first heat exchanger 110 is returned to the outdoor unit 10 by way of the buffer tank 140.

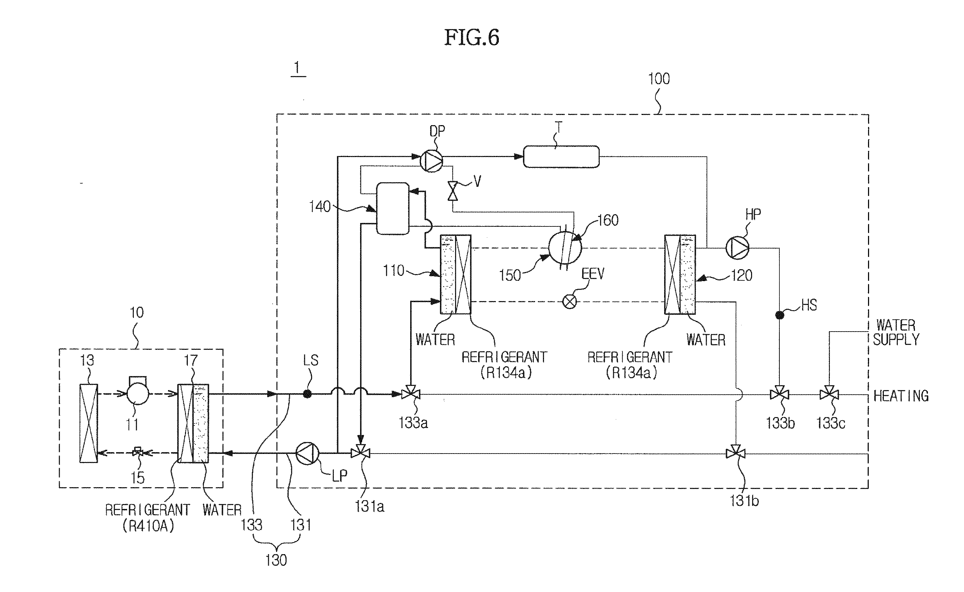

FIG. 6 is a schematic diagram illustrating a control method for the heat pump boiler during a defrosting operation according to an embodiment of the present invention.

The defrosting operation of the heat pump boiler 1 is an operation of feeding high-temperature water to the outdoor-unit heat-exchanger 17 installed to the outdoor unit 10 so as to defrost the evaporator 13 installed to the outdoor unit 10.

As shown in FIG. 6, first, the plurality of 3-way valves 131a, 131b, 133a, 133b, and 133c installed to the water feed pipe 131 and the water return pipe 133 and the high-temperature pump Hp are controlled to prevent circulation of water to the outside of the heat pump boiler 1.

Operation of the defrosting pump DP stops after preventing circulation of water to the outside of the heat pump boiler 1. Then, the solenoid valve V is closed to prevent high-temperature water stored in the buffer tank 140 from moving to the outside of the buffer tank 140 while the heat pump boiler 1 produces medium- or high-temperature hot water.

Next, the low-temperature pump LP is operated and the first 3-way valve 131a installed to the water feed pipe 131 is controlled, such that the high-temperature water stored in the buffer tank 140 is moved to the outdoor-unit heat-exchanger 17 installed to the outdoor unit 10.

The high-temperature water fed to the outdoor-unit heat-exchanger 17 transfers thermal energy to refrigerant via heat exchange. The resulting refrigerant that absorbs the thermal energy is moved to the evaporator 13 installed to the outdoor unit 10 so as to defrost the evaporator 13.

In this case, if the above-described defrosting operation is continued, the temperature of hot water stored in the buffer tank 140 will be lowered. A temperature sensor (not shown) is installed to the outdoor unit 10 to sense the temperature of hot water stored in the buffer tank 140. If the temperature of hot water stored in the buffer tank 140 is excessively lowered, the water stored in the buffer tank 140 may be directly discharged to the outside.

As is apparent from the above description, according to the embodiments of the present invention, an outdoor unit and a high-temperature water preparation unit are directly connected to each other via a water pipe, which may reduce installation costs of a refrigerant pipe.

Further, owing to a cycle configuration of the novel high-temperature water preparation unit, it may be possible to produce all temperature ranges of water including low-temperature, medium-temperature and high-temperature water at high energy efficiency, and to prevent production of cold water due to a defrosting operation, deterioration in heating energy efficiency (Coefficient of Performance (COP)), and a heating failure.

Although a few embodiments of the present invention have been shown and described, it would be appreciated by those skilled in the art that changes may be made in these embodiments without departing from the principles of the invention, the scope of which is defined in the claims.

## Claims

1. A heat pump boiler comprising:
an outdoor unit, to which an outdoor-unit heat-exchanger for heat exchange between refrigerant and water is installed;
a water pipe including a water feed pipe and a water return pipe, wherein the wafer feed pipe is connected to the outdoor unit to feed water to the outdoor unit, and the water return pipe is connected to the outdoor unit to return low-temperature or medium-temperature hot water and cold water produced in the outdoor unit to an external location;
a plurality of heat exchangers connected to the water pipe, in which refrigerant and water undergo heat exchange to produce medium-temperature or high-temperature hot water;
a compressor connected to the plurality of heat exchangers, wherein a capacity of the compressor is variable based on a set temperature of hot water;
a buffer tank connected to the water pipe and configured to store water therein; and
an externally-wound heat exchanger installed to the exterior of the variable-capacity compressor and serving to collect waste heat radiated outward from the compressor,
wherein a temperature of water stored in the buffer tank is raised using waste heat collected by the externally-wound heat exchanger, and
wherein, during a defrosting operation, the water stored in the buffer tank is fed to the outdoor-unit heat-exchanger of the outdoor unit while maintaining the raised temperature, to defrost an evaporator within the outdoor unit.

2. The heat pump boiler according to claim 1, wherein the outdoor-unit heat-exchanger installed to the outdoor unit includes a plate-shaped heat exchanger, and refrigerant to undergo heat exchange with water in the outdoor-unit heat-exchanger is R410A refrigerant.

3. The heat pump boiler according to claim 2, wherein the outdoor-unit heat-exchanger is installed to the outdoor unit such that the outdoor unit is directly connected to the water pipe, and low-temperature or medium-temperature hot water and cold water are directly produced via sole operation of the outdoor unit.

4. The heat pump boiler according to claim 1, wherein the plurality of heat exchangers include plate-shaped heat exchangers, and refrigerant to undergo heat exchange with water in the plurality of heat-exchangers is R134a refrigerant.

5. The heat pump boiler according to claim 4, wherein the plurality of heat exchangers include a first heat exchanger serving as an evaporator during a heating operation, and a second heat exchanger serving as a condenser.

6. The heat pump boiler according to any one of the preceding claims, wherein:
a plurality of 3-way valves is installed to the water pipe to selectively switch a circulating direction of water; and
the water feed pipe of the water pipe is provided with two 3-way valves, and the water return pipe of the water pipe is provided with three 3-way valves.

7. The heat pump boiler according to claim 5 or 6, wherein the two 3-way valves installed to the water feed pipe include:
a first 3-way valve located adjacent to the outdoor unit to allow water to be directly fed from the external location to the outdoor unit, or to allow water to be fed from the buffer tank to the outdoor unit; and
a second 3-way valve located at an opposite side of the first 3-way valve to allow water to be directly fed from the external location to the outdoor unit, or to allow water to be fed from the external location to the second heat exchanger.

8. The heat pump boiler according to claim 5 or 6, wherein the three 3-way valves installed to the water return pipe include:
a third 3-way valve located adjacent to the outdoor unit to allow water to be directly returned from the outdoor unit to the external location, or to allow water to be fed from the outdoor unit to the first heat exchanger;
a fourth 3-way valve located at an opposite side of the third 3-way valve to allow water to be directly returned from the outdoor unit to the external location, or to allow water to be returned from the second heat exchanger to the external location;
a fifth 3-way valve located at an opposite side of the third 3-way valve to allow water to be directly returned from the outdoor unit to the external location, or to allow water having passed through the second heat exchanger to be used for heating or water supply.

9. The heat pump boiler according to any one of the preceding claims, further comprising a low-temperature pump to circulate water such that water is fed from the external location to the outdoor unit, or is returned from the outdoor unit to the external location.

10. The heat pump boiler according to claim 5 or 9, wherein the low-temperature pump circulates water such that the low-temperature or medium-temperature water produced in the outdoor unit is again circulated to the outdoor unit by way of the first heat exchanger and the buffer tank.

11. The heat pump boiler according to claim 5, further comprising a high-temperature pump to circulate water such that water fed from the external location is returned to the external location by way of the second heat exchanger.

12. The heat pump boiler according to any one of the preceding claims, further comprising an expansion tank to prevent increase in interior pressure due to change in the temperature of water.

13. The heat pump boiler according to any one of the preceding claims, further comprising a low-temperature flow switch to sense the flow of water when water fed to the outdoor unit is returned to the external location, and to stop operation of the compressor installed to the outdoor unit if the flow of water stops, so as to prevent freezing and bursting or overheating of the outdoor-unit heat-exchanger due to abnormal operation of the outdoor unit.

14. The heat pump boiler according to claim 11, further comprising a high-temperature flow switch to sense the flow of water circulated by the high-temperature pump, and to stop the entire system if the flow of water stops.

15. The heat pump boiler according to any one of the preceding claims, further comprising:
a defrosting pump to circulate water between the externally-wound heat exchanger and the buffer tank; and
a solenoid valve to selectively intercept water circulated by the defrosting pump.
